# EUROPÄISCHE PATENTSCHRIFT

(11) **EP 2 449 878 B1**
(45) Veröffentlichungstag und Bekanntmachung des Hinweises auf die Patenterteilung: **28.06.2017**
(21) Anmeldenummer: 11008287.2
(22) Anmeldetag: 14.10.2011
(51) Int. Cl.: A01K 7/02

(54) **Tränkevorrichtung für Nutztiere**
Drink device for livestock
Dispositif d'abreuvement pour bétail

(30) Priorität: 08.11.2010 DE 102010050509
(43) Veröffentlichungstag der Anmeldung: 09.05.2012
(73) Patentinhaber: Suevia Haiges GmbH, 74366 Kirchheim/Neckar (DE)
(72) Erfinder: Haiges, Frank, 74366 Kirchheim/Neckar (DE)
(74) Vertreter: Bartels, Martin Erich Arthur

(56) Entgegenhaltungen:
- DE-B3-102009 025 729
- DE-U1- 20 004 073
- DE-U1-202004 002 665
- US-A- 5 345 063

## Beschreibung

Die Erfindung betrifft eine Tränkevorrichtung für Nutztiere, mit mindestens einer Tränkeschale, einer zugeordneten Wasserversorgungseinrichtung und einer Heizvorrichtung zum Verhindern des Gefrierens von in der Tränkeschale befindlichem Wasser, wobei die Heizvorrichtung zumindest ein Heizelement aufweist, das an der Außenseite der Tränkeschale für einen Wärmeübergang ins Innere derselben angeordnet ist. Ferner bezieht sich die Erfindung auf eine Heizvorrichtung für Tränkevorrichtungen dieser Art.

Es ist Stand der Technik, Tränkevorrichtungen, die beispielsweise in entsprechenden Klimazonen im Freien aufgestellt sind oder sich in Stallungen befinden, die keinen ausreichenden Schutz gegen winterliche Witterungseinflüsse bieten, mit Heizvorrichtungen auszurüsten. Beispielsweise zeigt das Dokument DE 200 04 073 U1 eine Vorrichtung, bei der eine durch ein Heizkabel gebildete Heizvorrichtung vorgesehen ist. Um einen ausreichenden Wärmeübergang vom Heizkabel zur Tränkeschale zu erzielen, sind bei der bekannten Lösung in den Boden der Tränkeschale außenseitig vertiefte, das Heizkabel aufnehmende Nuten eingearbeitet, die einen mäanderförmigen Verlauf besitzen, um eine ausreichende Kontaktierung für den Wärmeübergang zu gewährleisten. Eine solche Bauweise resultiert in verhältnismäßig hohen Herstellungskosten und führt zu einem großen Montageaufwand.

Aus der DE 20 2004 002 665 U1 und der DE 10 2009 025 729 B3 sind gattungsgemäße Tränkevorrichtungen für Nutztiere, mit mindestens einer Tränkeschale, einer zugeordneten Wasserversorgungseinrichtung und einer Heizvorrichtung zum Verhindern des Gefrierens von in der Tränkeschale befindlichem Wasser bekannt, wobei die Heizvorrichtung zumindest ein Heizelement aufweist, das an der Außenseite der Tränkeschale für einen Wärmeübergang ins Innere derselben angeordnet ist. Im Rahmen der DE 20 2004 002 665 U1 wird das Heizelement in Form einer Matte ausgebildet, die durch einen Deckel an der Unterseite der Schale gehalten und durch eine Noppenfolie an die Schale angedrückt wird. Bei der DE 10 2009 025 729 B3 ist die Heizplatte direkt an der Tränkeschale befestigt.

Die US 5 345 063 zeigt eine Tränkevorrichtung für Nutztiere, mit mindestens einer Tränkeschale und einer Heizvorrichtung zum Verhindern des Gefrierens von in der Tränkeschale befindlichem Wasser, wobei die Heizvorrichtung zumindest ein Heizelement aufweist, das an der Außenseite der Tränkeschale für einen Wärmeübergang ins Innere derselben angeordnet ist. Die Heizvorrichtung weist ein Formteil in Form eines flachen Troges auf, der das Heizelement aufnimmt und mit seiner offenen Seite an der Außenseite der Tränkeschale anbringbar ist. Das Formteil ist sehr formstabil und weist über den Außenumfang verteilte Rastnasen auf, die in entsprechenden Öffnungen der Tränkeschale eingreifen können.

Im Hinblick auf diesen Stand der Technik stellt sich die Erfindung die Aufgabe, eine Tränkevorrichtung zur Verfügung zu stellen, die demgegenüber einfacher und billiger herstellbar ist, nichts desto weniger sich jedoch durch eine effektive Heizwirkung auszeichnet.

Gemäß einem Aspekt der Erfindung ist diese Aufgabe durch eine Tränkevorrichtung gelöst, die die Merkmale des Patentanspruches 1 in seiner Gesamtheit aufweist.

Demgemäß besteht eine wesentliche Besonderheit der Erfindung darin, dass das Heizelement in einem aus elastomerem Material bestehenden, also nachgiebigen Formteil untergebracht ist, das in der Form eines flachen Troges gestaltet ist, der mit seiner offenen Seite an der Außenseite der Tränkeschale anbringbar ist. Der die Trogöffnung umgebende Rand der flexiblen Seitenwand des Troges schmiegt sich dabei an die Kontur des zugeordneten Außenwandbereiches der Tränkeschale an. Das Heizelement ist so innerhalb eines aus einem Elastomer bestehenden Bauteils, das aus sich heraus ein guter Wärmeisolator ist, derart gekammert, dass der Wärmeübergang, dank der angepassten Anlage des flexiblen Randes an der Tränkeschale, ohne wesentliche Wärmeverluste nach außen ins Innere der Tränkeschale stattfindet. Somit ist eine effiziente Heizwirkung bei geringstem Wärmeverlust gewährleistet. Ein weiterer besonderer Vorteil der Erfindung besteht darin, dass für den Einsatz der Heizvorrichtung an der Tränkeschale selbst keinerlei Vorkehrungen getroffen werden müssen, wie sie bei der erwähnten, bekannten Lösung in Form von außenseitig vertieften Nuten erforderlich sind, um ein Heizkabel aufzunehmen. Im Gegensatz hierzu läßt sich die Erfindung bei Tränkeschalen mit unterschiedlichster Gestaltung der Außenwand der Tränkeschale einsetzen, weil sich das Formteil aus elastomerem Werkstoff durch seine Flexibilität an unterschiedliche Formen von Tränkeschalen anpasst.

Hieraus resultiert der besondere zusätzliche Vorteil, dass die Heizvorrichtung als Nachrüstsatz an beliebige Formen bereits existierender Tränkeschalen angebaut werden kann, wenn ein Bedarf besteht, existierende Tränkevorrichtungen ohne Heizvorrichtung nachträglich mit einer solchen auszurüsten.

In besonders vorteilhafter Weise kann der Trog als rundes Gummiformteil mit einem flach gewölbten Boden ausgebildet sein, auf dem das Heizelement gelagert ist und an dessen Unterseite eine metallische, runde, der Wölbung des Troges angepasste Scheibe als Träger für das Gummiformteil anliegt.

Über einen derartigen scheibenförmigen Träger lässt sich das Gummiformteil einfach und sicher an der betreffenden Tränkeschale mittels einer Befestigungsschraube anbringen, die Bohrungen in der Scheibe und im Gummiformteil durchgreift.

Mit besonderem Vorteil kann die Heizvorrichtung ein Heizelement in Form eines Heizkabels aufweisen, das in mehreren Windungen innerhalb des Gummiformteils verläuft. Dadurch ist eine Wärmequelle mit gleichmäßiger Wärmeabgabe über den Bodenbereich des vom Gummiformteil gebildeten Troges vorhanden, so dass ein ausreichend großflächiger Wärmeübergang erfolgt und eine effektive Heizwirkung erreicht wird.

Bei der Benutzung eines Heizkabels kann in besonders vorteilhafter Weise das Gummiformteil am Boden des Troges nach innen vorstehende Führungskörper aufweisen, zwischen denen das Heizkabel in einer Spirale geführt ist, die sich von ihrem Anfang an einem Kabeldurchgang in der Seitenwand des Troges bis in die Nähe des Zentralbereiches des Bodens des Troges erstreckt.

Die Anordnung kann hierbei so getroffen sein, dass in der Nähe des Zentralbereiches des Troges eine muldenartige Bodenvertiefung geformt ist, in der das verdickte Ende der Spirale des Heizkabels lagesichernd aufnehmbar ist. Mit den Führungskörpern für die Kabelspirale und dank der Verankerungsmöglichkeit des Kabelendes in der Bodenvertiefung des Troges vereinfacht sich die Montage des Heizkabels im Trog, was wiederum die Herstellung der Gesamtvorrichtung vereinfacht und verbilligt.

Das in der Bodenvertiefung des Troges sicherbare, verdickte Ende des Heizkabels kann ein PTC-Widerstandselement enthalten, das in bekannter Weise eine selbsttätige Leistungsregelung bewirkt, so dass die Temperatur auf einen geeigneten Temperaturbereich selbsttätig eingestellt wird, ohne dass Thermostateinrichtungen erforderlich wären.

Für einen besonders gleichmäßigen Wärmeübergang vom Heizkabel auf die Tränkeschale kann in den Trog zwischen die Spirale des Heizkabels und die Außenseite der Tränkeschale eine Metallfolie als Verbindungselement für die Wärmeübertragung eingelegt sein.

Gegenstand der Erfindung ist auch eine Heizvorrichtung für Tränkevorrichtungen der eingangs genannten Art, die die Merkmale des Patentanspruches 8 aufweist. Weitere Ausgestaltungen der Heizvorrichtung sind in den weiteren Unteransprüchen 9 bis 11 angegeben.

Nachstehend ist die Erfindung anhand eines in der Zeichnung dargestellten Ausführungsbeispiels im Einzelnen erläutert. Es zeigen:
- Fig.1: in perspektivischer Darstellung eine Vorderansicht des Ausführungsbeispiels der erfindungsgemäßen Tränkevorrichtung;
- Fig.2 und 3: perspektivische Schrägansichten des Ausführungsbeispiels, gesehen von schräg oben bzw. von schräg unten;
- Fig.4: eine Draufsicht auf die Innenseite eines gesondert dargestellten Gummiformteils des Ausführungsbeispiels mit einer darin befindlichen Spirale eines Heizkabels;
- Fig.5: eine gegenüber den übrigen Figuren größer dargestellte, perspektivische Schrägansicht des Gummiformteils in Form eines flachen Troges, gesehen auf die Innenseite ohne darin befindliches Heizkabel; und
- Fig.6: eine Draufsicht einer Metallfolie, die als Zwischenlage zwischen die Heizkabelspirale von Fig. 4 und die Außenwand der Tränkeschale des Ausführungsbeispiels einlegbar ist.

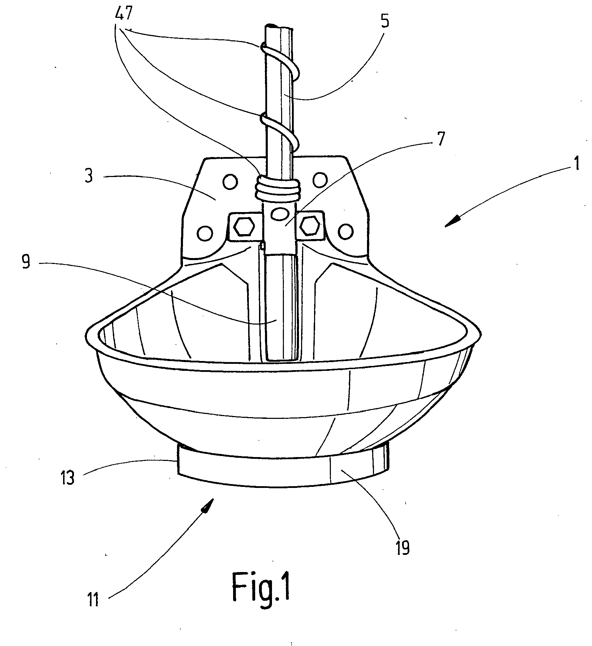

Die Fig. 1 bis 3 zeigen das Ausführungsbeispiel in einer Ausführungsform, bei der eine Tränkeschale 1 in der Form einer üblichen Gussschale vorgesehen ist, die einen angegossenen Befestigungsflansch 3 für die Anbringung der Tränkeschale 1 an einem nicht dargestellten Träger aufweist. Die Tränkeschale 1 ist mit einer Wasserversorgungseinrichtung üblicher Bauweise ausgerüstet, von der in der Zeichnung der Endbereich eines Wasserzulaufrohres 5 und ein Tränkeventil 7 dargestellt sind. Das lediglich schematisiert angedeutete Tränkeventil 7 kann von üblicher Bauweise sein und ein bewegliches Auslaufteil 9 aufweisen, das als Steuerelement des Ventils 7 dient und von einem Tier bewegbar ist, um den Wasserzulauf freizugeben.

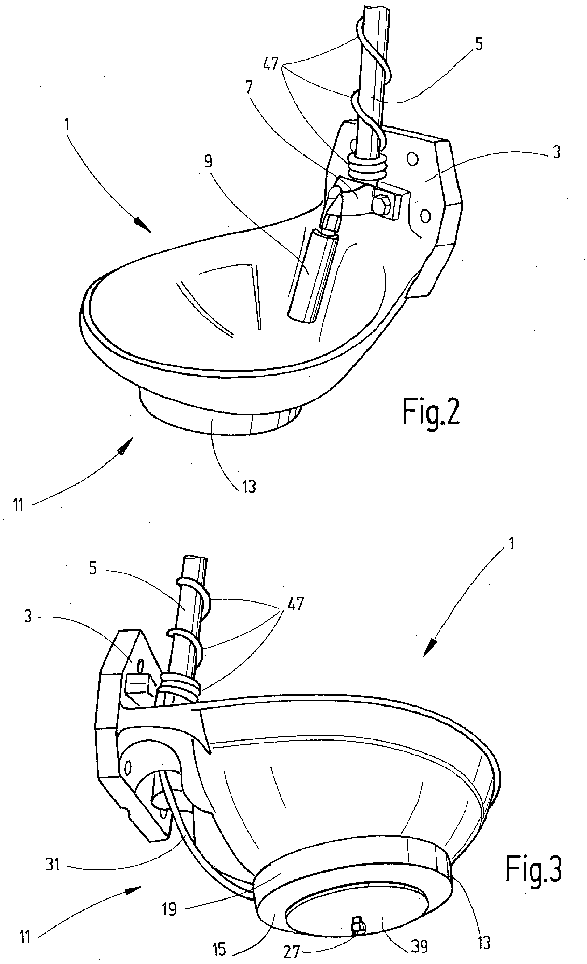

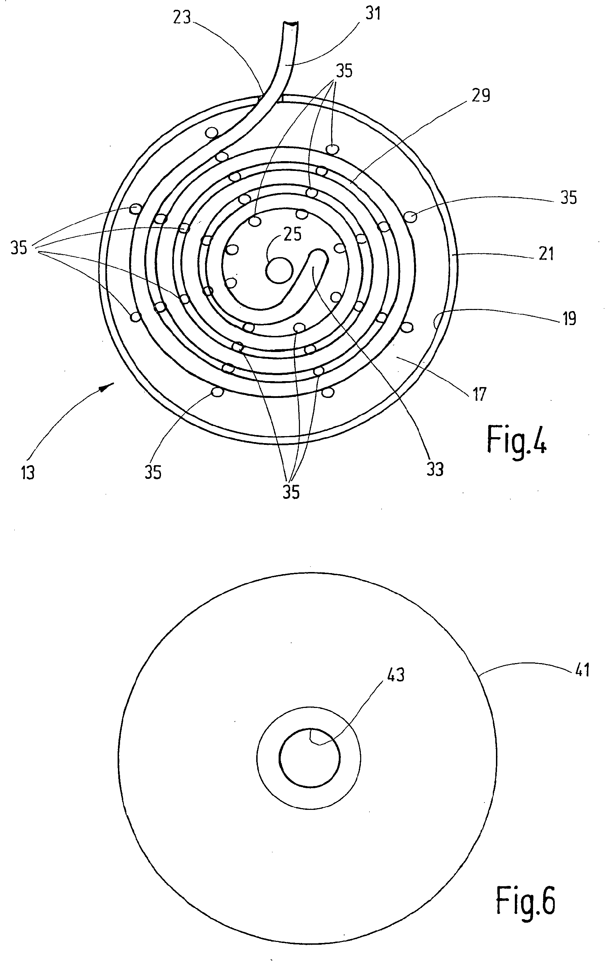

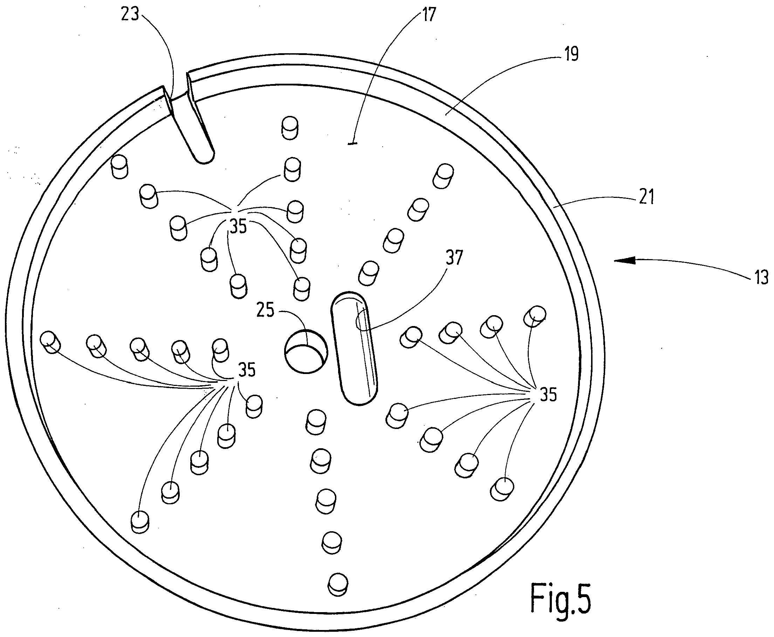

An der Unterseite der Tränkeschale 1 ist eine als Ganzes mit 11 bezeichnete Heizvorrichtung angebracht. Diese weist als Hauptbestandteil ein Gummiformteil 13 auf, von dem in Fig. 4 und 5 nähere Einzelheiten dargestellt sind. Wie ersichtlich, hat das Gummiformteil 13 die Form eines runden, flachen Topfes mit leicht nach außen gewölbtem Boden 15 (Fig. 3). Die ebenfalls leicht nach unten gewölbte Innenfläche 17 des Bodens des Troges 13 ist umfänglich von einer aus der Bodenfläche 17 vorstehenden, kreisringförmigen Seitenwand 19 begrenzt, deren Endrand 21 die Anlagefläche bildet, mit der das Formteil 13 mit seiner flexiblen Seitenwand 19 an der Außenseite der Tränkeschale 1 anliegt, wenn die Heizvorrichtung 13 an der Tränkeschale 1 befestigt ist. Wegen der Flexibilität der Seitenwand 19 des Gummiformteils 13 schmiegt sich dieses hierbei an die jeweilige Außenkontur der Tränkeschale 1 an, so dass der Innenraum zwischen der inneren Bodenfläche 17 des Formteils 13 und der Außenseite der Tränkeschale 1 praktisch vollständig gekammert ist, abgesehen von einer Unterbrechung 23, die in der Seitenwand 19 einen Kabeldurchgang bildet, sowie von einer zentralen Bodenöffnung 25, die einen Durchgang für eine Befestigungsschraube 27 (Fig. 3) bildet.

Wie am deutlichsten aus Fig. 4 ersichtlich ist, befindet sich auf der Bodenfläche 17 des Formteils 13 eine als Heizelement dienende Spirale 29 eines Heizkabels 31, das über die Unterbrechung 23 der Seitenwand 19 in den Innenraum des Formteils 13 eintritt. Dabei ist das Heizkabel 31 so geführt, dass sich die Spirale 29 vom Anfang an der Seitenwand 19 in Spiralwindungen bis in die Nähe der zentralen Öffnung 25 erstreckt, wo das Heizkabel 31 ein verdicktes Ende 33 besitzt. Dieses kann in an sich bekannter Weise ein PTC-Widerstandselement enthalten, durch das eine selbsttätige Leistungsregelung der Heizleistung des Heizkabels 31 bewirkt wird, so dass, ohne dass Thermostate benutzt werden müssten, ein geeigneter Temperaturbereich selbsttätig eingehalten wird. Es versteht sich, dass anstelle einer PTC-Regelung übliche Thermostateinrichtungen benutzt werden könnten.

Wie Fig. 5 zeigt, befindet sich in der Nähe der Öffnung 25 eine muldenartige Bodenvertiefung 37 in der inneren Bodenfläche 17, in der das verdickte Ende 33 des Heizkabels 31 sicherbar ist. Für die Lagestabilisierung der Spirale 29 des Heizkabels 31 sind an der inneren Bodenfläche 17 des Formteils 13 vorstehende Führungskörper 35 angeformt, die in der Zeichnung nicht sämtlich beziffert sind. Wie Fig. 4 zeigt, ist das Heizkabel 31 jeweils zwischen Paaren der Führungskörper 35 leicht klemmend geführt, die so als Windungsbildner dienen.

Wie bereits erwähnt und in Fig. 3 gezeigt, ist für die Befestigung des Heizvorrichtung 11 an der Außenseite des Bodenbereichs der Tränkeschale 1 eine Befestigungsschraube 27 vorgesehen, die mit dem Gummiformteil 13 über eine als Träger dienende, runde Metallscheibe 39, siehe Fig. 3, zusammenwirkt. Die Scheibe 39, die entsprechend der Bodenwölbung des Gummiformteils 13 leicht gewölbt ist, weist eine zentrale Bohrung für die Schraube 27 auf, die die zentrale Öffnung 25 im Gummiformteil 13 durchgreift und mit einer Sackbohrung mit Innengewinde in der Wand der Tränkeschale 1 verschraubt ist. Vervollständigt wird die Heizvorrichtung 11 durch eine lediglich in Fig. 6 dargestellte kreisrunde Metallfolie 41 mit zentralem Durchgang 43 für die Befestigungsschraube 27. Diese Folie 41 ist in das Gummiformteil 13 so eingelegt, dass sie auf der Heizspirale 29 aufliegt und an der Außenwand der Tränkeschale 1 anliegt. Die vorzugsweise aus Aluminium gebildete Folie 41 bewirkt eine bessere und gleichmäßigere Wärmeübertragung.

Wie in den Fig. 1 bis 3 gezeigt ist, kann die Länge des Heizkabels 31 so bemessen sein, dass sie in Zusatzwindungen 47 um das Zulaufrohr 5 geführt werden kann, um eine zusätzliche Beheizung des Zulaufrohres 5 zu ermöglichen.

Wegen der Flexibilität des Gummiformteils 13 passt sich dieses mit seinem Umfangsrand 21 an Tränkeschalen 1 unterschiedlicher Außenkontur an, so dass die Heizvorrichtung 11 für verschiedene Bauformen der Tränkeschalen benutzbar ist. Dadurch besteht auch die Möglichkeit, die Heizvorrichtung 11 als Nachrüstsatz an bereits bestehende Tränkevorrichtungen unterschiedlichster Bauformen nachträglich anzubringen.

## Patentansprüche

1. Tränkevorrichtung für Nutztiere, mit mindestens einer Tränkeschale (1), einer zugeordneten Wasserversorgungseinrichtung (5, 7, 9) und einer Heizvorrichtung (11) zum Verhindern des Gefrierens von in der Tränkeschale (1) befindlichem Wasser, wobei die Heizvorrichtung (11) zumindest ein Heizelement (31) aufweist, das an der Außenseite der Tränkeschale (1) für einen Wärmeübergang ins Innere derselben angeordnet ist, **dadurch gekennzeichnet, dass** die Heizvorrichtung (11) ein Formteil (13) aus elastomerem Werkstoff in Form eines flachen Troges aufweist, der das Heizelement (31) aufnimmt und mit seiner offenen Seite an der Außenseite der Tränkeschale (1) derart anbringbar ist, dass sich die flexible Seitenwand (19) des Troges mit ihrem die Trogöffnung umgebenden Rand (21) an die Kontur des zugeordneten Wandbereiches der Tränkeschale (1) anschmiegt.

2. Tränkevorrichtung nach Anspruch 1, **dadurch gekennzeichnet, dass** der Trog als rundes Gummiformteil (13) mit einem flach gewölbten Boden (15) ausgebildet ist, auf dem das Heizelement (29, 31) gelagert ist und an dessen Unterseite eine metallische, runde, der Wölbung des Troges angepasste Scheibe (39) als Träger für das Gummiformteil (13) anliegt.

3. Tränkevorrichtung nach Anspruch 2, **dadurch gekennzeichnet, dass** die Scheibe (39) und das Gummiformteil (13) eine Bohrung (25) für den Durchtritt einer Schraube (27) zur Befestigung der Heizvorrichtung (11) an der Tränkeschale (1) aufweist.

4. Tränkevorrichtung nach Anspruch 2 oder 3, **dadurch gekennzeichnet, dass** die Heizvorrichtung (11) ein Heizelement in Form eines Heizkabels (31) aufweist, das in mehreren Windungen (29) innerhalb des Gummiformteils (13) verläuft.

5. Tränkevorrichtung nach einem der Ansprüche 2 bis 4, **dadurch gekennzeichnet, dass** das Gummiformteil (13) am Boden (17) des Troges nach innen vorstehende Führungskörper (35) aufweist, zwischen denen das Heizkabel (31) in einer Spirale (29) geführt ist, die sich von ihrem Anfang an einem Kabeldurchgang (23) in der Seitenwand (19) des Troges bis in die Nähe des Zentralbereiches des Bodens (17) des Troges erstreckt.

6. Tränkevorrichtung nach Anspruch 5, **dadurch gekennzeichnet, dass** in der Nähe des Zentralbereiches des Troges eine muldenartige Bodenvertiefung (37) geformt ist, in der das verdickte Ende (33) der Spirale (29) des Heizkabels (31) lagesichernd aufnehmbar ist.

7. Tränkevorrichtung nach Anspruch 5 oder 6, **dadurch gekennzeichnet, dass** in den Trog zwischen die Spirale (29) des Heizkabels (31) und die Außenseite der Tränkeschale (1) eine Metallfolie (41) als Verbindungselement für die Wärmeübertragung eingelegt ist.

8. Heizvorrichtung für Tränkevorrichtungen nach dem Oberbegriff des Anspruches 1, **dadurch gekennzeichnet, dass** die Heizvorrichtung (11) ein Formteil (13) aus elastomerem Werkstoff in Form eines flachen Troges aufweist, der ein Heizelement (31) aufnimmt und mit seiner offenen Seite an der Außenseite der Tränkeschale (1) derart anbringbar ist, dass sich die flexible Seitenwand (19) des Troges mit ihrem die Trogöffnung umgebenden Rand (21) an die Kontur des zugeordneten Wandbereichs der betreffenden Tränkeschale (1) anschmiegt.

9. Heizvorrichtung nach Anspruch 8, **dadurch gekennzeichnet, dass** der Trog als rundes Gummiformteil (13) mit einem flach gewölbten Boden (15) ausgebildet ist, auf dem das Heizelement (29, 31) gelagert ist und an dessen Unterseite eine metallische, runde, der Wölbung des Troges angepasste Scheibe (39) als Träger für das Gummiformteil (13) anliegt.

10. Heizvorrichtung nach Anspruch 9, **dadurch gekennzeichnet, dass** die Scheibe (39) und das Gummiformteil (13) eine Bohrung (25) für den Durchtritt einer Schraube (27) zur Befestigung der Heizvorrichtung (11) an der Tränkeschale (1) aufweist.

11. Heizvorrichtung nach einem der Ansprüche 9 oder 10, **dadurch gekennzeichnet, dass** die Heizvorrichtung (11) ein Heizelement in Form eines Heizkabels (31) aufweist, das in mehreren Windungen (29) innerhalb des Gummiformteils (13) verläuft.

12. Heizvorrichtung nach einem der Ansprüche 9 bis 11, **dadurch gekennzeichnet, dass** das Gummiformteil (13) am Boden (17) des Troges nach innen vorstehende Führungskörper (35) aufweist, zwischen denen das Heizkabel (31) in einer Spirale (29) geführt ist, die sich von ihrem Anfang an einem Kabeldurchgang (23) in der Seitenwand (19) des Troges bis in die Nähe des Zentralbereiches des Bodens (17) des Troges erstreckt.

## Claims

1. A watering device for livestock, comprising at least one watering bowl (1), an assigned water supply device (5, 7, 9) and a heating device (11) for preventing water located in the watering bowl (1) from freezing, the heating device (11) having at least one heating element (31) which is disposed on the outside of the watering bowl (1) for transferring heat to the inside of the latter, **characterised in that** the heating device (11) has a moulded part (13) made of elastomeric material in the form of a flat trough which accommodates the heating element (31) and can be attached by its open side to the outside of the watering bowl (1) such that the flexible side wall (19) of the trough nestles against the contour of the assigned wall region of the watering bowl (1) with its edge (21) that surrounds the trough opening.

2. The watering device according to Claim 1, **characterised in that** the trough is made in the form of a round rubber moulded part (13) with a slightly curved bottom (15) on which the heating element (29, 31) is mounted and against the lower side of which a metal, round disc (39) matched to the curve of the trough rests as a support for the rubber moulded part (13).

3. The watering device according to Claim 2, **characterised in that** the disc (39) and the rubber moulded part (13) have a bore hole (25) through which a screw (27) can pass for the fastening of the heating device (11) to the watering bowl (1).

4. The watering device according to Claim 2 or 3, **characterised in that** the heating device (11) has a heating element in the form of a heating cable (31) which runs in a number of windings (29) within the rubber moulded part (13).

5. The watering device according to any of Claims 2 to 4, **characterised in that** the rubber moulded part (13) has on the bottom (17) of the trough inwardly projecting guide elements (35) between which the heating cable (31) is guided in a spiral (29) which extends from its start at a cable passage (23) in the side wall (19) of the trough to the vicinity of the central region of the bottom (17) of the trough.

6. The watering device according to Claim 5, **characterised in that** a basin-like bottom depression (37) is moulded in the vicinity of the central region of the trough, in which depression the thickened end (33) of the spiral (29) of the heating cable (31) can be accommodated for secure positioning.

7. The watering device according to Claim 5 or 6, **characterised in that** a metal foil (41) is inserted into the trough between the spiral (29) of the heating cable (31) and the outside of the watering bowl (1) as a connection element for the transfer of heat.

8. A heating device for watering devices according to the preamble to Claim 1, **characterised in that** the heating device (11) has a moulded part (13) made of elastomeric material in the form of a flat trough which accommodates a heating element (31) and can be attached by its open side to the outside of the watering bowl (1) such that the flexible side wall (19) of the trough nestles against the contour of the assigned wall region of the respective watering bowl (1) with its edge (21) that surrounds the trough opening.

9. The heating device according to Claim 8, **characterised in that** the trough is made in the form of a round rubber moulded part (13) with a slightly curved bottom (15) on which the heating element (29, 31) is mounted and against the lower side of which a metal, round disc (39) matched to the curve of the trough rests as a support for the rubber moulded part (13).

10. The heating device according to Claim 9, **characterised in that** the disc (39) and the rubber moulded part (13) have a bore hole (25) through which a screw (27) can pass for the fastening of the heating device (11) to the watering bowl (1).

11. The heating device according to either of Claims 9 or 10, **characterised in that** the heating device (11) has a heating element in the form of a heating cable (31) which runs in a number of windings (29) within the rubber moulded part (13).

12. The heating device according to any of Claims 9 to 11, **characterised in that** the rubber moulded part (13) has on the bottom (17) of the trough inwardly projecting guide elements (35) between which the heating cable (31) is guided in a spiral (29) which extends from its start at a cable passage (23) in the side wall (19) of the trough to the vicinity of the central region of the bottom (17) of the trough.

## Revendications

1. Abreuvoir pour des animaux utiles, comprenant au moins un bassin (1), un dispositif (5, 7, 9) associé d'alimentation en eau et un dispositif (11) de chauffage pour empêcher l'eau se trouvant dans le bassin (1) de geler, le dispositif (11) de chauffage ayant au moins un élément (31) chauffant, qui est monté sur le côté extérieur du bassin (1) en vue d'une transmission de chaleur à l'intérieur de celui-ci, **caractérisé en ce que** le dispositif (11) de chauffage a une pièce (13) conformée en matériau élastomère sous la forme d'une auge plate, qui reçoit l'élément (31) chauffant et qui peut, par son côté ouvert, être mise sur le côté extérieur du bassin (1), de manière à ce que la paroi (19) latérale souple de l'auge s'applique, par son bord (21) entourant l'ouverture de l'auge, au contour de la partie de paroi associée du bassin (1).

2. Abreuvoir suivant la revendication 1, **caractérisé en ce que** l'auge est constituée sous la forme d'une pièce (13) conformée ronde en caoutchouc ayant un fond (15) plat courbé, sur lequel est monté l'élément (29, 31) de chauffage et sur la face inférieure duquel s'applique, comme support pour la pièce (13) de forme en caoutchouc, un disque (39) métallique circulaire adapté à la courbure de l'auge.

3. Abreuvoir suivant la revendication 2, **caractérisé en ce que** le disque (39) et la pièce (13) conformée en caoutchouc ont un trou (25) pour le passage d'une vis (27) de fixation du dispositif (11) de chauffage au bassin (1).

4. Abreuvoir suivant la revendication 2 ou 3, **caractérisé en ce que** le dispositif (11) de chauffage a un élément chauffant sous la forme d'un câble (31) chauffant, qui s'étend en plusieurs spires (29) à l'intérieur de la pièce (13) conformée en caoutchouc.

5. Abreuvoir suivant l'une des revendications 2 à 4, **caractérisé en ce que** la pièce (13) conformée en caoutchouc a, au fond (17) de l'auge, des corps (35) de guidage en saillie vers l'intérieur, entre lesquels le câble (31) de chauffage est. guidé suivant une spirale (29), qui s'étend de son début sur un passage (23) pour le câble dans la paroi (19) latérale de l'auge jusqu'à proximité de la région centrale du fond (17) de l'auge.

6. Abreuvoir suivant la revendication 5, **caractérisé en ce que**, à proximité de la région centrale de l'auge, est formée une cavité (37) de fond de type en moulure, dans laquelle l'extrémité (33) épaissie de la spirale (29) du câble (31) de chauffage peut être reçue d'une manière sécurisée en position.

7. Abreuvoir suivant la revendication 5 ou 6, **caractérisé en ce qu'**une feuille (41) métallique est, comme élément de liaison pour la transmission de chaleur, insérée dans l'auge entre la spirale (29) du câble (31) de chauffage et le côté extérieur du bassin (1).

8. Dispositif de chauffage pour des abreuvoirs suivant le préambule de la revendication 1, **caractérisé en ce que** le dispositif (11) de chauffage a une pièce (13) conformée en matériau élastomère sous la forme d'une auge plate, qui reçoit un élément (31) chauffant et qui peut, par son côté ouvert, être mise sur le côté extérieur du bassin (1), de manière à ce que la paroi (19) latérale souple de l'auge s'applique, par son bord (21) entourant l'ouverture de l'auge, au contour de la région de paroi associée du bassin (1) concerné.

9. Dispositif de chauffage suivant la revendication 8, **caractérisé en ce que** l'auge est constituée sous la forme d'une pièce (13) conformée ronde en caoutchouc ayant un fond (15) plat incurvé, sur lequel est monté l'élément (29, 31) chauffant et sur le côté inférieur duquel s'applique, comme support pour la pièce (13) conformée en caoutchouc, un disque (39) métallique circulaire adapté à la courbure de l'auge.

10. Dispositif de chauffage suivant la revendication 9, **caractérisé en ce que** le disque (39) et la pièce (13) conformée en caoutchouc ont un trou (25) pour le passage d'une vis (27) de fixation du dispositif (11) de chauffage au bassin (1).

11. Dispositif de chauffage suivant l'une des revendications 9 ou 10, **caractérisé en ce que** le dispositif (11) de chauffage a un élément chauffant sous la forme d'un câble (31) chauffant, qui s'étend en plusieurs spires (29) à l'intérieur de la pièce (13) conformée en caoutchouc.

12. Dispositif de chauffage suivant l'une des revendications 9 à 11, **caractérisé en ce que** la pièce (13) conformée en caoutchouc a, au fond (17) de l'auge, des corps (35) de guidage en saillie vers l'intérieur, entre lesquels le câble (31) de chauffage est guidé suivant une spirale (29), qui s'étend de son début sur un passage (23) pour le câble dans la paroi (19) latérale de l'auge jusqu'à proximité de la région centrale du fond (17) de l'auge.
